# EUROPEAN PATENT APPLICATION

(11) **EP 3 261 288 A1**
(43) Date of publication of application: **27.12.2017**
(21) Application number: 16752108.7
(22) Date of filing: 12.02.2016
(51) Int. Cl.: H04L 9/32, H04W 4/08, H04W 12/06

(54) **COMMUNICATION SYSTEM, COMMUNICATION TERMINAL, AUTHENTICATION METHOD AND NON-TRANSITORY COMPUTER-READABLE MEDIUM STORING PROGRAM FOR SAME**

(30) Priority: 16.02.2015 JP 2015027355
(71) Applicant: NEC Corporation, Tokyo 108-8001 (JP)
(72) Inventor: ZHANG, Xiaowei, Tokyo 108-8001 (JP); PRASAD, Anand Raghawa, Tokyo 108-8001 (JP)
(74) Representative: MacDougall, Alan John Shaw
(86) International application number: PCT/JP2016/000727
(87) International publication number: WO 2016/132718

(57) **Abstract**

An object of the present invention is to provide a communication system with reduced load on a network in authentication, with an increased number of communication terminals using the network. A communication system of the present invention includes: a representative communication terminal (20) belonging to a communication group (10) formed by a plurality of communication terminals; subordinate communication terminals (30) to (32) belonging to the communication group (10) and being separate from the representative communication terminal (20); and a node apparatus (40) exerting call processing control relating to the plurality of communication terminals belonging to the communication group (10). The representative communication terminal (20) and the subordinate communication terminals (30) to (32) have shared key information and shared SIM information. The representative communication terminal (20) transmits, to the subordinate communication terminals (30) to (32), part of information contained in authentication information received from the node apparatus (40), and executes authentication of the subordinate communication terminals (30) to (32) using the key information and the authentication information.

## Description

### Technical Field

The present invention relates to communication systems, communication terminals, authentication methods, and programs. More particularly, present invention relates to a communication system, a communication terminal, an authentication method, and a program, in each of which authentication is executed using, for example, key information.

### Background Art

Nowadays, proliferation of mobile phones and smartphones has so explosively proliferated that one person may own a plurality of mobile phones and the like. In the future, in addition to those terminals owned by humans, M2M (Machine to Machine) terminals that autonomously communicate with other communication apparatuses are expected to grow in number. In 3GPP (3rd Generation Partnership Project), the M2M terminals are referred to as MTC (Machine Type Communication) terminals and the like. The M2M terminals may be vending machines that have communication functions, or sensor apparatuses that have communication functions. Similarly to mobile phones and the like, the M2M terminals must be authenticated in establishing communication using a network. In addition to the growth in the number of M2M terminals, growth in the number of wearable terminals and proliferation of home network home appliances are also expected. One person may own many wearable terminals. Exemplary network home appliances include air conditioners, robotic cleaners and refrigerators.

Non Patent Literature 1 discloses the flow of authentication in using a network defined in 3GPP.

### Citation List

### Non Patent Literature

Non Patent Literature 1: 3GPP TS 33.401 V12.13.0, Chapters 6 and 7 (2014-12)

### Summary of Invention

### Technical Problem

In the future, a sharp growth in the number of M2M terminals is expected. Accordingly, when every M2M terminal performs authentication processing disclosed in Non Patent Literature 1, unfortunately load on the network in the authentication processing will increase.

An object of the present invention is to provide a communication system, communication terminal, an authentication method, and a program with reduced load on a network in the authentication processing when the number of communication terminals using the network increases.

### Solution to Problems

A communication system according to a first aspect of the present invention includes: a representative communication terminal that belongs to a communication group formed by a plurality of communication terminals; a subordinate communication terminal that belongs to the communication group and is separate from the representative communication terminal; and a node apparatus that exerts call processing control relating to the plurality of communication terminals belonging to the communication group, wherein the representative communication terminal and the subordinate communication terminal include shared key information and shared SIM information, and the representative communication terminal transmits, to the subordinate communication terminal, part of information contained in authentication information received from the node apparatus, and executes authentication of the subordinate communication terminal using information set in a response message received from the subordinate communication terminal, the key information, and the authentication information.

A communication terminal according to a second aspect of the present invention belongs to a communication group formed by a plurality of communication terminals, the communication terminal including: a device communication unit that communicates with a subordinate communication terminal belonging to the communication group and; a network communication unit that communicates with a node apparatus that exerts call processing control relating to the plurality of communication terminals belonging to the communication group; a storage unit that stores key information shared with the subordinate communication terminal; and an authentication unit that transmits, to the subordinate communication terminal, authentication information received from the node apparatus, and executes authentication of the subordinate communication terminal using information set in a response message received from the subordinate communication terminal, the key information, and the authentication information.

An authentication method according to a third aspect of the present invention is executed in a representative communication terminal belonging to a communication group including a representative communication terminal and a subordinate communication terminal, the authentication method including: transmitting, to the subordinate communication terminal, part of information contained in authentication information received from a node apparatus that exerts call processing control over the representative communication terminal and the subordinate communication terminal belonging to the communication group; and executing authentication of the subordinate communication terminal using information set in a response message received from the subordinate communication terminal, the authentication information, and shared key information and shared SIM information stored in the representative communication terminal and the subordinate communication terminal.

A program according to a fourth aspect of the present invention causes a computer being a representative communication terminal belonging to a communication group including a representative communication terminal and a subordinate communication terminal to execute the steps of: transmitting, to the subordinate communication terminal, part of information contained in authentication information received from a node apparatus exerting call processing control over the representative communication terminal and the subordinate communication terminal belonging to the communication group; and executing authentication of the subordinate communication terminal using information set in a response message received from the subordinate communication terminal, the authentication information, and shared key information and shared SIM information stored in the representative communication terminal and the subordinate communication terminal. Advantageous Effects of Invention

The present invention provides a communication system, a communication terminal, an authentication method, and a program with reduced load on a network in authentication, with an increased number of communication terminals using the network.

### Brief Description of the Drawings

Fig. 1 is a configuration diagram of a communication system according to a first embodiment.
Fig. 2 is a configuration diagram of a master device according to a second embodiment.
Fig. 3 is a configuration diagram of an MME according to the second embodiment.
Fig. 4 shows the flow of the master device authenticating second devices according to the second embodiment.
Fig. 5 shows the flow of authentication in a communication system according to the second embodiment.
Fig. 6 shows the flow of authentication in the communication system according to the second embodiment.
Fig. 7 is a configuration diagram of an MME according to a third embodiment.
Fig. 8 shows the flow of authentication in a communication system according to the third embodiment.
Fig. 9 shows the flow of authentication in the communication system according to the third embodiment.

### Description of Embodiments

### First Embodiment

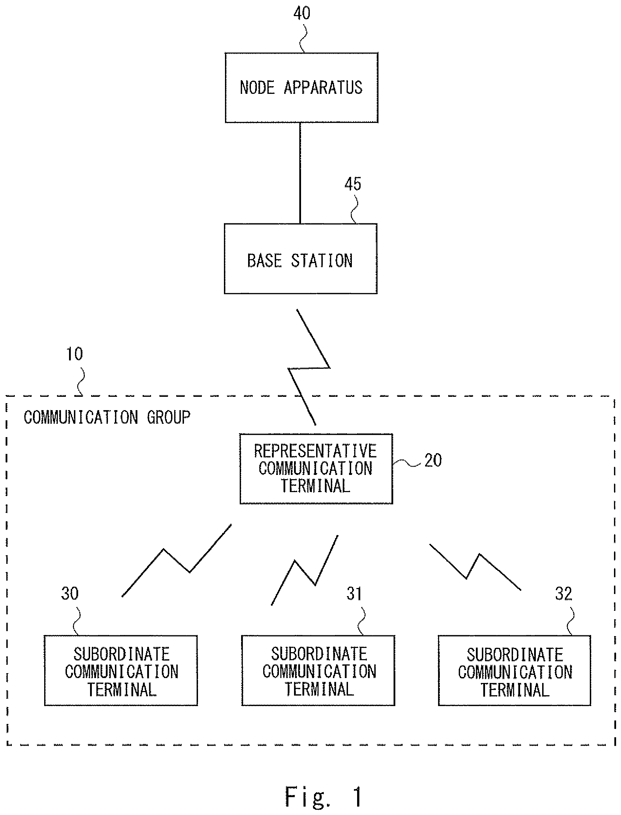

In the following, with reference to the drawings, a description will be given of embodiments of the present invention. Firstly, with reference to Fig. 1, a description will be given of an exemplary configuration of a communication system according to a first embodiment of the present invention. The communication system shown in Fig. 1 includes a representative communication terminal 20, subordinate communication terminals 30 to 32, a base station 45, and a node apparatus 40. The representative communication terminal 20 and the subordinate communication terminals 30 to 32 form a communication group 10. The communication group 10 is a group formed by a plurality of communication terminals. The terminals forming the communication group 10 may be a plurality of wearable terminals worn by a human, network home appliances at home, sensors or meters in a building, communication terminals for a family or a certain group, or vending machines managed by a manufacturer.

The representative communication terminal 20 and the subordinate communication terminals 30 to 32 may be, for example, smartphones or computer apparatuses that have communication functions. Further, the representative communication terminal 20 may be a mobile router. The representative communication terminal 20 communicates with the node apparatus 40 via the base station 45. Further, the representative communication terminal 20 may be connected to the base station 45 via wire or wirelessly. Alternatively, the representative communication terminal 20 may be connected to the base station 45 via a network. Still further, the representative communication terminal 20 may be connected to the subordinate communication terminals 30 to 32 via wire or wirelessly. Alternatively, the representative communication terminal 20 may be connected to the subordinate communication terminals 30 to 32 via a network.

The node apparatus 40 executes call processing control relating to a plurality of communication terminals belonging to the communication group 10. The call processing control is, for example, path configuration in a mobile network for data exchanged between the representative communication terminal 20 and the subordinate communication terminals 30 to 32, authentication processing of the representative communication terminal 20 or the like. The node apparatus 40 is, for example, an MME (Mobility Management Entity) or an SGSN (Serving GPRS Support Node) that is defined in 3GPP as the apparatus that executes the call processing control.

The representative communication terminal 20 and the subordinate communication terminals 30 to 32 share common key information and common SIM (Subscriber Identity Module) information. The key information may be, for example, information that is used for generating a cipher key or a secret key. The key information may be set in the representative communication terminal 20 and the subordinate communication terminals 30 to 32, for example when the terminals are manufactured. Alternatively, the key information may be set in the representative communication terminal 20 and the subordinate communication terminals 30 to 32 not via a network but via an information recording medium or the like. Alternatively, the representative communication terminal 20 and the subordinate communication terminals 30 to 32 may acquire the key information via a reliable and robustly secured communication path.

The representative communication terminal 20 receives authentication information transmitted by the node apparatus 40. Further, the representative communication terminal 20 transmits part of information contained in the received authentication information to the subordinate communication terminals 30 to 32. For example, the authentication information may be information that is used in determining whether or not to permit the representative communication terminal 20 and the subordinate communication terminals 30 to 32 to belong to the communication group 10.

Further, the representative communication terminal 20 authenticates the subordinate communication terminals 30 to 32 using information set in a response message from the subordinate communication terminals, the key information, and the authentication information received from the node apparatus 40. For example, the representative communication terminal 20 may determine, as authentication processing, whether or not the subordinate communication terminals 30 to 32 can use services provided to the communication group 10.

As has been described above, in the communication system shown in Fig. 1, each of the subordinate communication terminals 30 to 32 is required to perform authentication processing between the representative communication terminal 20 and each of the subordinate communication terminals 30 to 32, and each of subordinate communication terminals 30 to 32 is not required to perform authentication processing between the node apparatus 40 and each of subordinate communication terminals 30 to 32. In other words, the node apparatus 40 is required to authenticate just the representative communication terminal 20 belonging to the communication group 10; it is not required to authenticate the subordinate communication terminals 30 to 32. This configuration reduces the load on the node apparatus 40 in the authentication processing, as compared to a configuration in which the node apparatus 40 authenticates the representative communication terminal 20 and the subordinate communication terminals 30 to 32.

### Second Embodiment

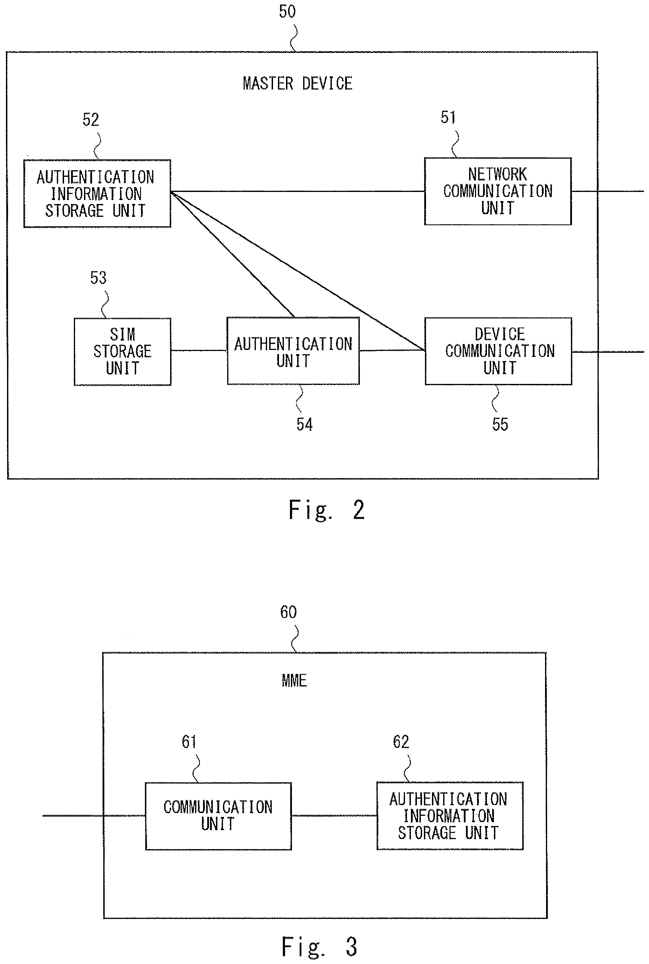

In the following, with reference to Fig. 2, a description will be given of an exemplary configuration of a master device 50 according to a second embodiment of the present invention. The master device 50 corresponds to the representative communication terminal 20 shown in Fig. 1. The master device 50 may also be referred to as, for example, a master unit, a master apparatus or the like. Further, in the present embodiment, the apparatuses corresponding to the subordinate communication terminals 30 to 32 shown in Fig. 1 are referred to as second devices. The second devices may be referred to as, for example, slave units, subordinate apparatuses or the like. The apparatus corresponding to the node apparatus 40 shown in Fig. 1 is referred to as an MME 60.

The master device 50 and the plurality of second devices use services provided to the communication group 10. The service provided to the communication group 10 may be, for example, a broadcast service to the communication group 10. That is, a plurality of devices belonging to the communication group 10 can receive identical information in unison. Alternatively, a smartphone, a wearable device and the like owned by the user may belong to the communication group 10, and identical information may be transmitted to the smartphone, the wearable device and the like. Alternatively, when a plurality of second devices positioned far away from the master device 50 belong to the communication group 10, identical information may be transmitted to the communication group 10 and the plurality of second devices.

The master device 50 includes a network communication unit 51, an authentication information storage unit 52, a SIM (Subscriber Identity Module) storage unit 53, an authentication unit 54, and a device communication unit 55.

When the master device 50 is a smartphone or a mobile router, the network communication unit 51 wirelessly communicates with a base station included in the mobile network. The base station may be, for example, an eNB (evolved Node B) defined in 3GPP. Alternatively, the base station may be a base station adapted to a so-called 2G or 3G radio communication scheme. Note that, when the master device 50 is a stationary radio router or the like, the network communication unit 51 may perform wired communication with the base station. The network communication unit 51 transmits, via the eNB, control signals to the MME 60 or the like. Further, the network communication unit 51 receives, via the eNB, control signals transmitted by the MME 60 or the like.

The network communication unit 51 transmits, for example, information relating to authentication of the communication group 10 to the MME 60. The information relating to the authentication of the communication group 10 may be, for example, information that identifies the communication group 10. Further, the information relating to the authentication of the communication group 10 may contain identification information of every second device belonging to the communication group 10.

The network communication unit 51 receives, for example, an authentication vector (hereinafter referred to as the group AV (Group Authentication Vector)) that is used in the communication group 10 from the MME. The group AV is, for example, information indicative of predetermined random numbers to be used in the communication group 10. The network communication unit 51 outputs the received group AV to the authentication information storage unit 52.

The authentication information storage unit 52 stores the group AV output from the network communication unit 51. The authentication information storage unit 52 may be an internal memory provided in the master device 50, or may be an external storage apparatus or the like attached to the master device 50.

The SIM information storage unit 53 stores SIM information (hereinafter referred to as the Group SIM) that is shared between the master device 50 and the second devices belonging to the communication group 10. The Group SIM shared in the communication group 10 may further contain, for example, identification information that identifies the communication group 10. Further, the SIM information storage unit 53 also retains key information (hereinafter referred to as the key information K) shared between the master device 50 and the second devices belonging to the communication group 10.

The Group SIM and the key information K may be set in the authentication information storage unit 52, for example when the master device 50 is manufactured. Alternatively, the Group SIM and the key information K may be set in the authentication information storage unit 52 not via a network but via an information recording medium or the like. Alternatively, the authentication information storage unit 52 may acquire the Group SIM and the key information K via a reliable and robustly secured communication path. The Group SIM and the key information K are also set in the second devices, similarly to the master device 50.

The authentication unit 54 generates key information Kasme using the Group SIM and the key information K stored in the SIM information storage unit 53, and the Group AV stored in the authentication information storage unit 52. Further, the authentication unit 54 performs a predetermined operation using the Group SIM, the key information K, and the Group AV, and retains the operation result. The predetermined operation may be, for example, an XOR (Exclusive OR or Exclusive disjunction) operation.

The device communication unit 55 communicates with the plurality of second devices. The device communication unit 55 may communicate with the second devices using, for example, wireless LAN (Local Area Network) communication, or using near field radio communication such as Bluetooth (registered trademark), NFC (Near Field Communication) and the like. Alternatively, the device communication unit 55 may communicate with the second devices positioned far away from the master device 50 via a mobile network. In the case where the device communication unit 55 uses a mobile network, the network communication unit 51 and the device communication unit 55 may be similar functional blocks, apparatuses, circuits or the like.

The device communication unit 55 transmits, to the plurality of second devices, the Group AV stored in the authentication information storage unit 52. Similarly to the authentication unit 54, the second devices having received the Group AV generate key information Kasme and perform a predetermined operation.

The authentication unit 54 determines, via the device communication unit 55, whether or not the operation results at each of the second devices and the operation result retained in the authentication unit 54 match with each other, thereby determining whether or not to permit each of the second devices to belong to the communication group 10.

Next, with reference to Fig. 3, a description will be given of an exemplary configuration of the MME 60 according to the second embodiment of the present invention. The MME 60 includes a communication unit 61 and an authentication information storage unit 62.

The authentication information storage unit 62 stores the Group AV for each communication group. The communication unit 61 communicates with the master device 50 via the eNB. Upon receipt of information that identifies a communication group from the master device 50, the communication unit 61 extracts, from the authentication information storage unit 62, the Group AV relating to the communication group identified by the received information. The communication unit 61 transmits the extracted Group AV to the master device 50.

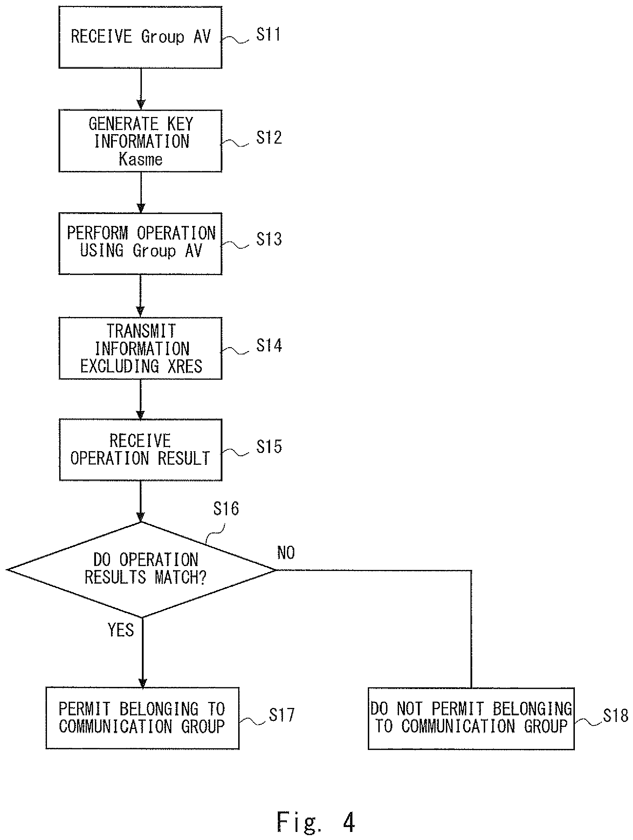

Next, with reference to Fig. 4, a description will be given of the flow of the master device 50 authenticating the second devices. Firstly, the network communication unit 51 receives the Group AV from the MME 60 (S11). Next, the authentication unit 54 generates the key information Kasme using the Group SIM, the key information K, and the Group AV (S12). Next, the authentication unit 54 performs a predetermined operation using the Group SIM, the key information K, and the Group AV (S13).

Next, the device communication unit 55 transmits, out of a plurality of pieces of information contained in the Group AV received from the MME 60, information excluding XRES (Expected Response) to a plurality of second devices (S14). Next, the device communication unit 55 receives operation results derived at the second devices using the Group SIM, the key information K, and the plurality of pieces of information contained in the Group AV excluding the XRES (S15).

Next, the authentication unit 54 determines whether or not the operation result derived from the operation performed in step S13 and the operation results received from the second devices in step S 15 match with each other (S16). When the authentication unit 54 determines that the operation results match with each other, the authentication unit 54 permits the second devices to belong to the communication group 10 (S17). When the authentication unit 54 determines that the operation results do not match with each other, the authentication unit 54 does not permit the second devices to belong to the communication group 10 (S18). In other words, the master device 50 does not transmit the XRES received from the MME 60 to the second devices, but authenticates the second devices based on comparison between the RES received from the second devices and the XRES that the master device 50 retains.

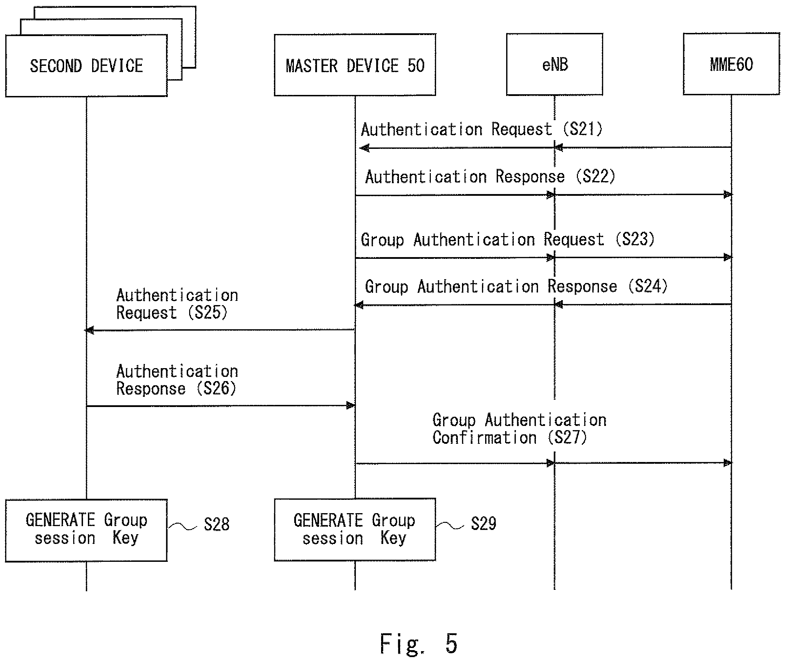

Next, with reference to Fig. 5, a description will be given of the flow of authentication processing according to the second embodiment of the present invention. Firstly, the master device 50 performs authentication processing between the MME 60 and the master device 50 for using a mobile network. That is, prior to performing authentication processing for using the communication group, the master device 50 performs authentication processing for performing normal communication via a mobile network. The normal communication is communication other than communication relating to any service using the communication group 10. For example, the normal communication may be communication that the master device 50 specifies a designation communication terminal and uses a mobile network, or may be communication that the master device 50 is specified as the designation and uses the mobile network.

In order to execute authentication processing for performing the normal communication between the master device 50 and the MME 60 via a mobile network, the MME 60 transmits an Authentication Request message to the master device 50 via the eNB (S21). Throughout the following description, communication between the MME 60 and the master device 50 is performed via the eNB. The MME 60 transmits an Authentication Request message in which an authentication vector (hereinafter referred to as the AV) is set.

Next, the master device 50 performs a predetermined operation using the received AV, SIM and key information K1, and transmits, to the MME 60, an Authentication Response message in which the result of the executed operation is set (S22). Here, the SIM is different from the Group SIM, and used in normal communication that is not using the communication group 10. Further, the key information K1 is different from the key information K, and used in normal communication that is not using the communication group 10.

The MME 60 authenticates the master device 50 using the operation result received from the master device 50 and the operation result derived by the MME 60 itself.

Next, the master device 50 transmits a Group Authentication Request message to the MME 60 for performing authentication processing relating to the communication group 10 (S23). The master device 50 sets, for example, information identifying the communication group 10 in the Group Authentication Request message. Further, the master device 50 may set, in the Group Authentication Request message, identification information of every second device belonging to the communication group 10.

Next, the MME 60 transmits, to the master device 50, a Group Authentication Response message in which the Group AV associated with the communication group 10 that the master device 50 belongs to is set (S24).

Next, the master device 50 transmits, to the second devices, an Authentication Request message, setting therein a plurality of pieces of information contained in the Group AV received from the MME 60 excluding the XRES (S25). When there are a plurality of second devices, the master device 50 transmits the Authentication Request message to each second device.

Next, the each of second devices transmits, to the master device 50, an Authentication Response message, setting therein an operation result derived by using the plurality of pieces of information contained in the Group AV excluding the XRES (S26). The master device 50 executes authentication using the operation results received from the second devices, and transmits, to the MME 60, a Group Authentication Confirmation message, setting therein a result of the authentication (S27). Receiving the Group Authentication Confirmation message, the MME 60 can recognize the second devices belonging to the communication group 10.

Next, the second devices and the master device 50 generate a Group Session Key to be used in communication using the communication group 10 (S28, S29).

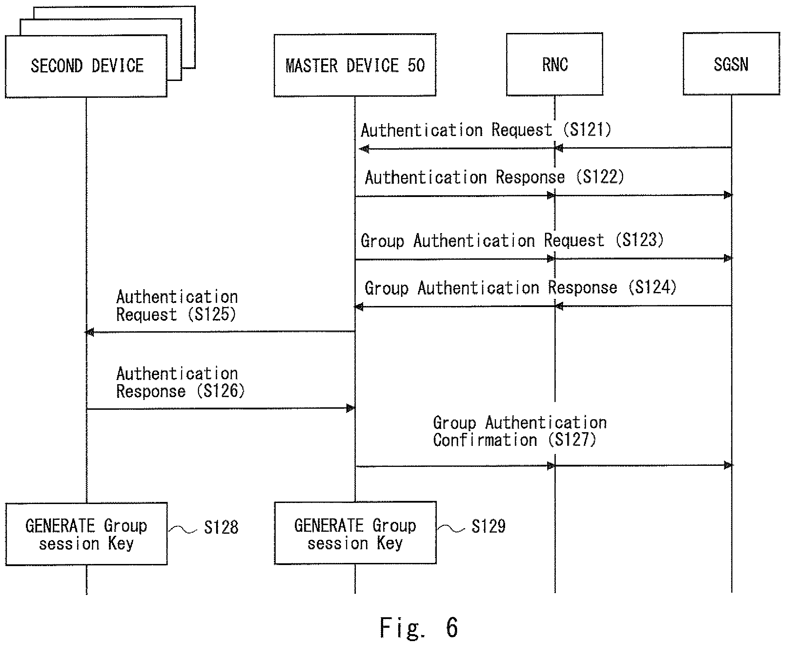

Further, the flow of authentication processing shown in Fig. 5 is applicable also to a 3G system that uses W-CDMA. In this case, as shown in Fig. 6, the eNB may be replaced by an RNC (Radio Network Controller), and the MME may be replaced by an SGSN. Further, the RNC may be replaced by an access point that performs wireless LAN communication. Steps S121 to S129 in Fig. 6 are similar to steps S21 to S29 in Fig. 5, and therefore the detailed description thereof is not repeated.

As has been described above, in the communication system according to the second embodiment of the present invention, the authentication processing between the second devices and the MME 60 or the SGSN is not performed. Therefore, as compared to a configuration where the MME 60 or the SGSN authenticates every second device, the load on the MME 60 or the SGSN in the authentication processing reduces.

Further, the master device 50 and the second devices belonging to the communication group 10 use the Group SIM and the key information K, separately from the SIM and the key information K1 which are used in normal communication different from communication using the communication group 10. Accordingly, the key information Kasme that is generated using the SIM and the key information used in normal communication is different from the key information Kasme that is generated using the Group SIM and the key information K. Thus, in the case where the key information Kasme generated using the SIM and the key information used in normal communication is updated, it is not necessary for the key information Kasme generated using the Group SIM and the key information K to be updated. That is, the key information Kasme generated using the Group SIM and the key information K is not influenced by any update of the key information Kasme generated using the SIM and the key information used in normal communication.

### Third Embodiment

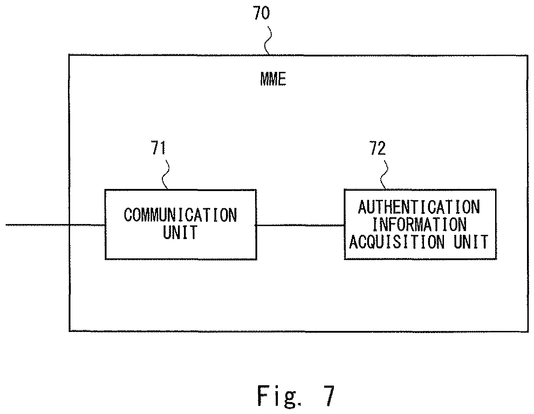

In the following, with reference to Fig. 7, a description will be given of an exemplary configuration of an MME 70 according to a third embodiment of the present invention. The MME 70 shown in Fig. 7 is different from the MME 60 shown in Fig. 3 in that, while the MME 60 stores the Group AV in the authentication information storage unit 62, the MME 70 acquires the Group AV from other apparatus. Specifically, the MME 70 may acquire the Group AV from the HSS (Home Subscriber Server), which is defined in 3GPP as the node that manages the subscriber data.

Next, a description will be given of the exemplary configuration of the MME 70. The MME 70 includes a communication unit 71 and an authentication information acquisition unit 72. The communication unit 71 is similar to the communication unit 61 in the MME 60, and therefore the detailed description thereof is not repeated.

The authentication information acquisition unit 72 acquires the Group AV from other apparatus such as the HSS. The authentication information acquisition unit 72 outputs the acquired Group AV to the communication unit 71.

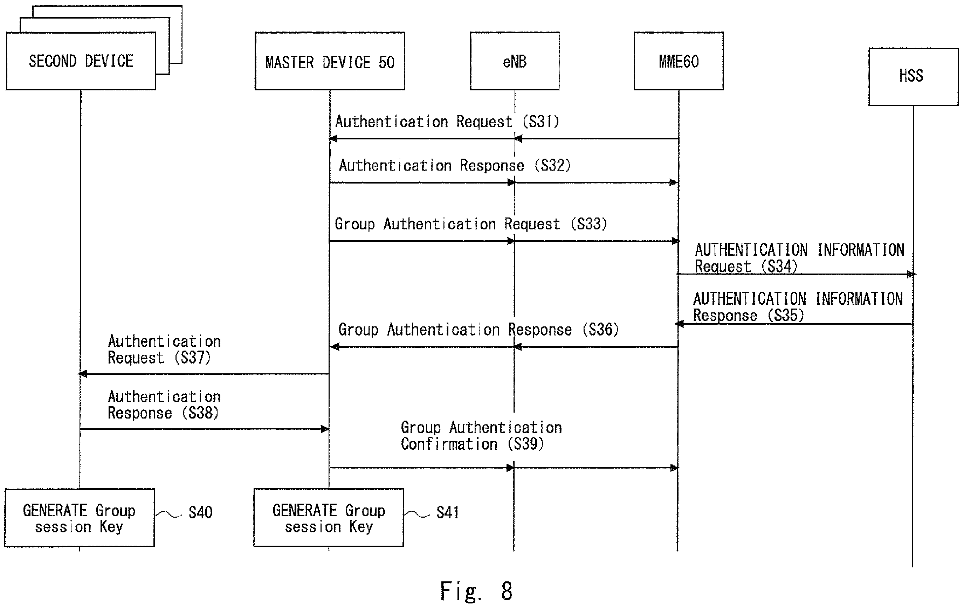

Next, with reference to Fig. 8, a description will be given of the flow of authentication processing according to the third embodiment of the present invention. Steps S31 to S33 are similar to steps S21 to S23 in Fig. 5, and therefore the detailed description thereof is not repeated.

When the MME 70 receives the Group Authentication Request message in step S33, the MME 70 transmits an Authentication Information Request message to the HSS in order to acquire the Group AV relating to the communication group 10 to which the master device 50 belongs (S34).

Next, the HSS transmits an Authentication Information Response message in which the Group AV relating to the communication group 10 is set (S35). Steps S36 to S41 are similar to steps S24 to S29 in Fig. 5, and therefore the detailed description thereof is not repeated.

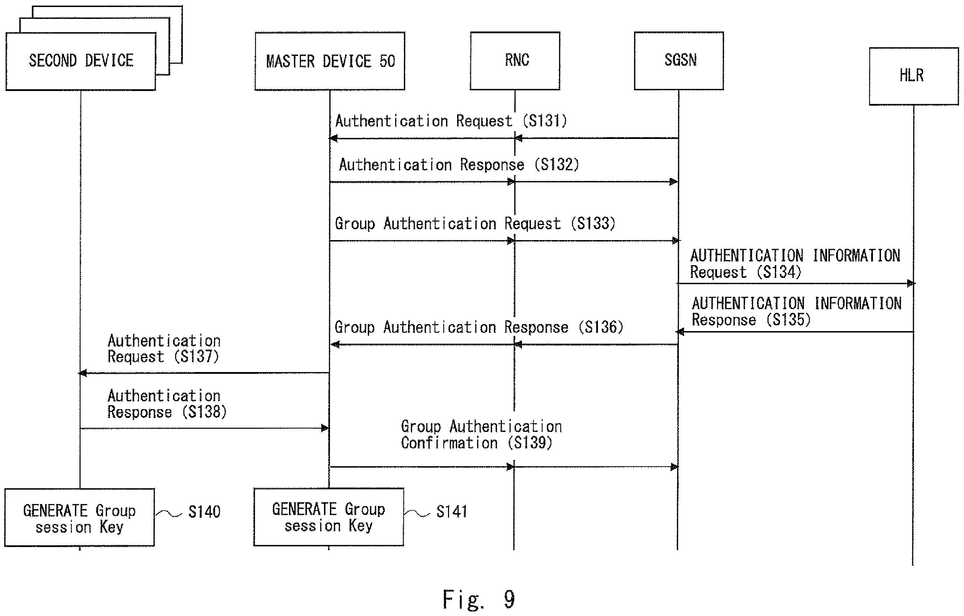

Further, the flow of authentication processing shown in Fig. 8 is applicable also to a 3G system that uses W-CDMA. In this case, as shown in Fig. 9, the eNB may be replaced by an RNC (Radio Network Controller), and the MME may be replaced by an SGSN. Further, the HSS may be replaced by an HLR (Home Location Register). Still further, the RNC may be replaced by an access point that performs wireless LAN communication. Steps S131 to S141 in Fig. 9 are similar to steps S31 to S41 in Fig. 8, and therefore the detailed description thereof is not repeated.

As has been described above, in the communication system according to the third embodiment, it is not necessary for the MME 70 that executes call processing control to store the Group AV. Thus, the memory capacity which would otherwise be used for storing the Group AV is saved.

Further, an operation according to a combination of the first and second embodiments can be executed. For example, when the MME 70 firstly performs authentication relating to the communication group 10, the MME 70 may acquire the Group AV from the HSS and store the acquired Group AV in the MME 70 itself. From that time onward, when the MME 70 receives a Group Authentication Request message in which information relating to the communication group 10 from the master device 50, the MME 70 may transmit the Group AV stored in itself to the master device 50. That is, the MME 70 acquires the Group AV in order to transmit the Group AV not stored in the MME 70 to the master device 50. When transmission of the Group AV stored in the MME 70 will suffice, the MME 70 transmits the stored Group AV to the master device 50.

In the embodiments described above, while the present invention has been described as a hardware configuration, the present invention is not limited thereto. The present invention can realize the processes performed by the master device 50 by causing a CPU (Central Processing Unit) to execute a computer program.

In the example described above, a program can be stored using various types of non-transitory computer readable media, and supplied to a computer. The non-transitory computer readable media include various types of tangible storage media. Exemplary non-transitory computer readable media include magnetic recording media (e.g., flexible disks, magnetic tapes, hard disk drives), magneto-optical recording media (e.g., magneto-optical discs), CD-ROM (Read Only Memory), CD-R, CD-R/W, semiconductor memories (e.g., mask ROM, PROM (Programmable ROM), EPROM (Erasable PROM), flash ROM, RAM (Random Access Memory)). The program may be supplied to a computer by various types of transitory computer readable media. Exemplary transitory computer readable media include electric signals, optical signals, and electromagnetic waves. A transitory computer readable medium can supply a program to a computer via a wired communication path such as an electrical wire and an optical fiber, or a wireless communication path.

Note that, the present invention is not limited to the embodiments described above, and can be changed as appropriate within a range not departing from the spirit of the present invention.

While the invention has been described in terms of the embodiments, the invention is not limited to the foregoing description. The configuration and details of the present invention can be realized with various modifications that can be understood by those skilled in the art within the scope of the invention.

This application is based upon and claims the benefit of priority from Japanese patent application No. 2015-027355, filed on February 16, 2015, the disclosure of which is incorporated herein in its entirety by reference.

### Reference Signs List

- 10: communication group
- 20: representative communication terminal
- 30: subordinate communication terminal
- 31: subordinate communication terminal
- 32: subordinate communication terminal
- 40: node apparatus
- 45: base station
- 50: master device
- 51: network communication unit
- 52: authentication information storage unit
- 53: SIM information storage unit
- 54: authentication unit
- 55: device communication unit
- 60: MME
- 61: communication unit
- 62: authentication information storage unit
- 70: MME
- 71: communication unit
- 72: authentication information acquisition unit

## Claims

1. A communication system comprising:
a representative communication terminal that belongs to a communication group formed by a plurality of communication terminals;
a subordinate communication terminal that belongs to the communication group and is separate from the representative communication terminal; and
a node apparatus that executes call processing control relating to the plurality of communication terminals belonging to the communication group, wherein
the representative communication terminal and the subordinate communication terminal include shared key information and shared SIM information, and
the representative communication terminal transmits, to the subordinate communication terminal, part of information contained in authentication information received from the node apparatus, and executes authentication of the subordinate communication terminal using information set in a response message received from the subordinate communication terminal, the key information, the SIM information, and the authentication information.

2. The communication system according to Claim 1, wherein the representative communication terminal executes authentication of the subordinate communication terminal using an operation result derived by the subordinate communication terminal performing a predetermined operation using the key information and the authentication information, and an operation result derived by the representative communication terminal itself performing an operation using the key information and the authentication information.

3. The communication system according to Claim 1 or 2, wherein the representative communication terminal transmits identification information of the communication group to the node apparatus, and receives authentication information associated with the communication group from the node apparatus.

4. The communication system according to anyone of Claims 1 to 3, wherein the representative communication terminal and the subordinate communication terminal generate, using the SIM information, the authentication information, and the key information, Kasme information used in the communication group.

5. The communication system according to any one of Claims 1 to 4, wherein upon receipt of the identification information of the communication group from the representative communication terminal, the node apparatus transmits, to the representative communication terminal, authentication information associated with the communication group previously retained, or authentication information associated with the communication group previously acquired from another node apparatus.

6. A communication terminal belonging to a communication group formed by a plurality of communication terminals, the communication terminal comprising:
device communication means for communicating with a subordinate communication terminal belonging to the communication group;
network communication means for communicating with a node apparatus that executes call processing control relating to the plurality of communication terminals belonging to the communication group;
storage means for storing key information shared with the subordinate communication terminal; and
authentication means for transmitting, to the subordinate communication terminal, authentication information received from the node apparatus, and executing authentication of the subordinate communication terminal using information set in a response message received from the subordinate communication terminal, the key information, and the authentication information.

7. The communication terminal according to Claim 6, wherein the authentication means executes authentication of the subordinate communication terminal using an operation result derived by the subordinate communication terminal performing a predetermined operation using the key information and the authentication information, and an operation result derived by the authentication means itself performing an operation using the key information and the authentication information.

8. The communication terminal according to Claim 6 or 7, wherein
the storage means includes shared SIM information, and
the authentication means generates, using the SIM information, the authentication information, and the key information, Kasme information used in the communication group.

9. An authentication method executed in a representative communication terminal belonging to a communication group including a representative communication terminal and a subordinate communication terminal, the authentication method comprising:
transmitting, to the subordinate communication terminal, part of information contained in authentication information received from a node apparatus that executes call processing control over the representative communication terminal and the subordinate communication terminal belonging to the communication group; and
executing authentication of the subordinate communication terminal using information set in a response message received from the subordinate communication terminal, the authentication information, and shared key information and shared SIM information stored in the representative communication terminal and the subordinate communication terminal.

10. A non-transitory computer readable medium storing a program for causing a computer being a representative communication terminal belonging to a communication group including a representative communication terminal and a subordinate communication terminal to execute the steps of:
transmitting, to the subordinate communication terminal, part of information contained in authentication information received from a node apparatus executing call processing control over the representative communication terminal and the subordinate communication terminal belonging to the communication group; and
executing authentication of the subordinate communication terminal using information set in a response message received from the subordinate communication terminal, the authentication information, and shared key information and shared SIM information stored in the representative communication terminal and the subordinate communication terminal.
